# FASCICULE DE BREVET EUROPEEN

(11) **EP 1 290 764 B1**
(45) Date de publication et mention de la délivrance du brevet: **17.12.2003**
(21) Numéro de dépôt: 01940632.1
(22) Date de dépôt: 29.05.2001
(51) Int. Cl.: H01R 39/38, H01R 39/39, H01R 39/40, H02K 5/14

(54) **PORTE-BALAI POUR BALAI EN CHARBON**
KOHLEBÜRSTENHALTER
BRUSH HOLDER FOR CARBON BRUSH

(30) Priorité: 08.06.2000 FR 0007365
(43) Date de publication de la demande: 12.03.2003
(73) Titulaire: ArvinMeritor Light Vehicle Systems-France, 45600 Sully sur Loire (FR)
(72) Inventeur: LAURANDEL, Hervé, F-14200 Herouville Saint Clair (FR); RAOUL, Philippe, F-14700 Fresne la Mere (FR)
(74) Mandataire: Jacobson, Claude
(86) Numéro de dépôt international: FR0101670
(87) Numéro de publication internationale: WO01095439

(56) Documents cités:
- DE-A- 4 215 446
- DE-U- 7 609 317
- FR-A- 2 582 872
- FR-A- 2 763 753
- US-A- 3 087 081
- US-A- 3 924 147
- US-A- 4 404 488
- PATENT ABSTRACTS OF JAPAN vol. 11, no. 127 (E-501), 21 avril 1987 (1987-04-21) -& JP 61 273147 A (SANKYO SEIKI MFG CO LTD), 3 décembre 1986 (1986-12-03)
- PATENT ABSTRACTS OF JAPAN vol. 6, no. 175 (E-125), 17 août 1982 (1982-08-17) -& JP 57 075549 A (MATSUSHITE ELECTRIC WORKS LTD), 12 mai 1982 (1982-05-12)
- PATENT ABSTRACTS OF JAPAN vol. 1998, no. 9, 31 juillet 1998 (1998-07-31) -& JP 10 108402 A (JIDOSHA DENKI KOGYO CO LTD), 24 avril 1998 (1998-04-24)

## Description

La présente invention a pour objet un motoréducteur, notamment un motoréducteur destiné à l'activation d'équipements fonctionnels de véhicules, tels que lève-vitres, sièges, toits-ouvrants ...

Ce moteur électrique comprend un arbre de rotor muni d'un collecteur coopérant avec des balais conducteurs disposés dans des supports de balais fixés à une carte de circuit imprimé d'alimentation en courant électrique. Le dispositif support de chaque balai, relativement complexe, comprend, dans une réalisation connue, une cage métallique et un ressort de maintien du balai en appui sur le collecteur. Les composants des cages métalliques constituant les supports de balais traversent la carte de circuit imprimé pour pouvoir être fixés à celle-ci, avec laquelle ils sont solidarisés par une opération de soudage « à la vague » au-dessus d'un bain de métal liquide. Un tel moteur électrique est décrit dans le document US-A-3 924 147.

Le document FR-A-2 582 872 décrit une plaque porte-balais pour moteur électrique avec une cage métalligue traversant une carte de circuit imprimé pour pouvoir être fixée á celle-ci par une opération de soudage «à la vague» au-dessus d'un bain de métal liquide.

L'invention a pour but de simplifier le montage et l'assemblage des supports de balais sur la carte de circuit imprimé afin de supprimer l'opération complémentaire de soudure « à la vague» et d'assurer corrélativement une diminution du coût de fabrication du moteur.

Conformément à l'invention, le moteur électrique est pourvu de moyens pour permettre le montage des supports de balais uniquement en surface de la carte de circuit imprimé.

En effet cette fixation en surface évite de faire traverser la carte par les cages métalliques supports des balais, et rend donc inutile l'opération de soudure complémentaire sur la face opposée de la carte.

Suivant un mode de réalisation de l'invention, lesdits moyens comprennent, pour chaque balai, un carter métallique contenant le balai et dont une paroi, contiguë à la carte de circuit imprimé, comporte au moins une patte transversale adaptée pour traverser la carte de circuit imprimé afin de positionner et de maintenir le carter sur ladite carte, et pour assurer une liaison électrique.

Dans une réalisation avantageuse, deux pattes transversales de positionnement sont ainsi prévués :ces pattes assurent, outre le maintien du support de balai sur la carte de circuit imprimé, la conduction électrique et en outre résistent à l'effort exercé par le balai sur le collecteur.

La (ou les) patte(s) peut(peuvent) être montée(s) à force dans la carte, revêtue(s) de pâte à souder et traitée(s) dans un four de manière connue.

En variante, il est également possible de monter la patte à force dans un trou métallisé de la carte, afin d'assurer la connexion électrique.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en perspective partielle, sensiblement à l'échelle, d'un moteur électrique, illustrant un dispositif de montage des supports de balais placés en appui avec le collecteur coaxial à l'arbre de rotor.

La figure 2 est une vue en coupe longitudinale axiale de l'un des dispositifs support de balai de la figure 1, à échelle agrandie.

La figure 3 est une vue analogue à la figure 2 représentant une première forme de réalisation du dispositif porte-balais selon l'invention.

La figure 4 est une vue en perspective partielle analogue à la figure 1 représentant une seconde forme de réalisation du moteur électrique selon l'invention.

La figure 5 est une vue partielle en plan suivant la flèche K de la figure 4 à échelle agrandie.

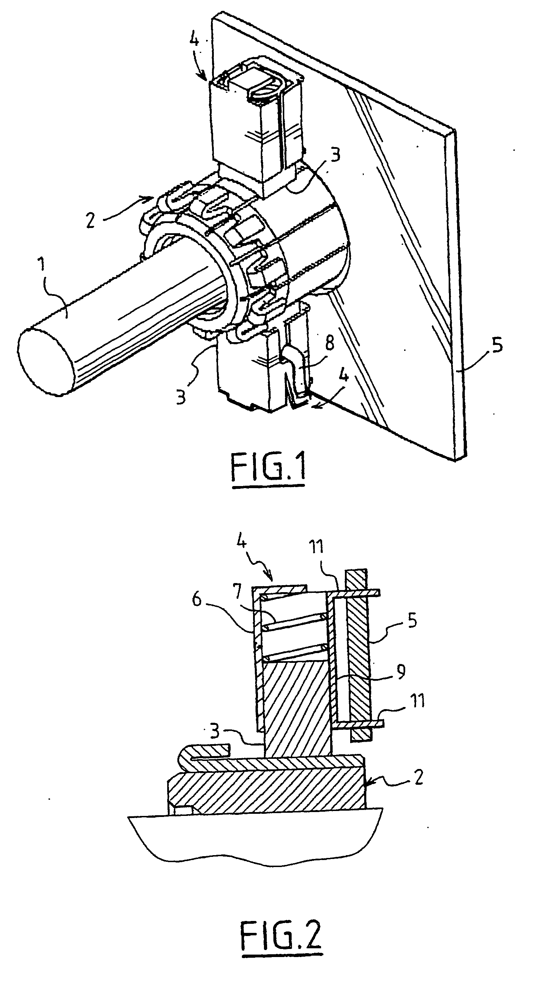

Le moteur électrique partiellement représenté aux figures 1 et 2 peut être notamment un motoréducteur destiné à l'activation d'équipements fonctionnels de véhicules. Il comprend un arbre 1 d'un rotor non représenté, muni d'un collecteur 2 coopérant avec deux balais conducteurs 3 diamétralement opposés, disposés dans des supports 4 de balais fixés à une carte de circuit imprimé 5 s'étendant perpendiculairement à l'axe longitudinal du rotor 1.

Les autres éléments constituant le moteur électrique sont bien connus en soi et n'ont donc pas été représentés.

Ce moteur électrique est équipé de moyens permettant le montage des supports 4 des balais 3 uniquement en surface de la carte de circuit imprimé 5 sans que les supports proprement dits traversent celle-ci. Dans la forme de réalisation représentée, ces moyens comprennent, pour chaque balai 3, un carter métallique 6 formant une cage et contenant le balai correspondant 3, ainsi qu'un ressort 7 de poussée du balai 3 afin de le maintenir en appui conducteur sur le collecteur 2.

Le ressort 7 peut être hélicoïdal comme représenté et prend appui sur le fond du carter 6. Au balai 3 est fixée une tresse métallique conductrice 8. Une paroi 9 de la cage 6, contiguë à la carte de circuit imprimé 5 comporte au moins une patte transversale 11 adaptée pour traverser la carte 5 afin de positionner et de maintenir le carter 6 sur celle-ci 5, et pour assurer une liaison électrique. Dans la réalisation représentée à la figure 2, la paroi 9, parallèle à la carte 5, est ainsi équipée de deux pattes d'extrémité 11, réalisées par exemple par estampage et qui servent au positionnement correct de la cage 4 ainsi qu'à la conduction électrique. En outre, les pattes 11 permettent de résister à l'effort développé par la pression du balai 3 sur le collecteur 2.

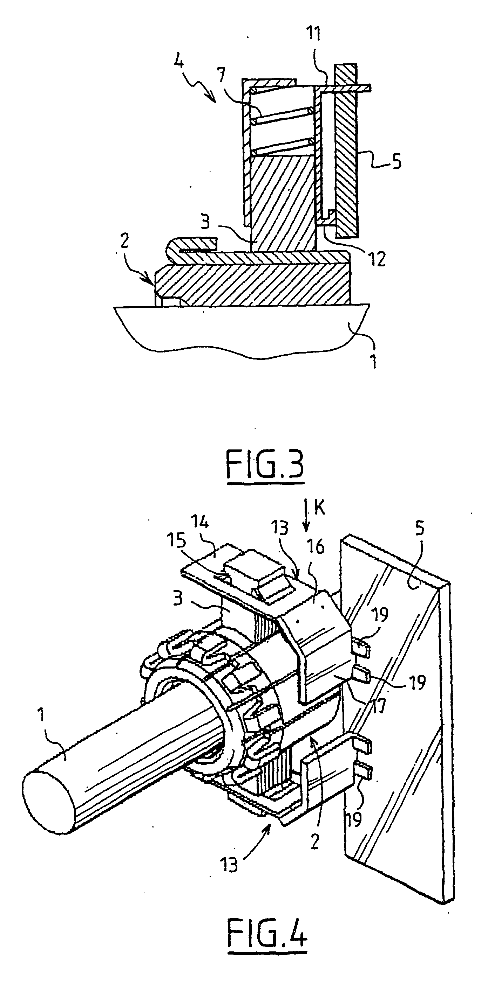

Dans la variante de réalisation de la figure 3, le dispositif support du balai 3 ne comporte qu'une seule patte de positionnement et de conduction électrique 11 traversant la carte 5. La seconde patte 11 est remplacée par une patte repliée 12 prenant appui sur la surface de la carte de circuit imprimé 5 sans la traverser. Cette patte 12 sert à la conduction électrique après soudure sur la carte de circuit imprimé 5 et passage dans un four, ainsi qu'à l'appui de la cage 4 sur la carte 5.

Dans les deux modes de réalisation des figures 2 et 3, les pattes 11 peuvent être fixées à la carte de circuit imprimé 5 de deux manières :
a) Soit elles sont montées à force à travers la carte 5, puis revêtues de pâte à souder et traitées dans un four de manière connue,
b) Soit les pattes 11 sont montées à force dans un trou métallisé de la carte de circuit imprimé 5, afin d'assurer une connexion électrique.

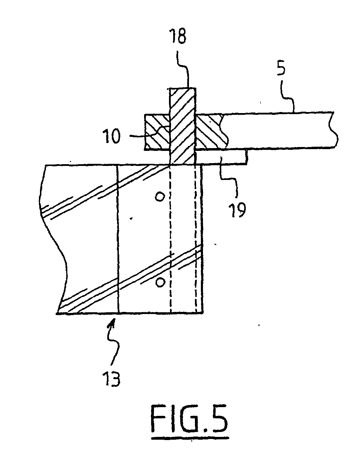

Dans la seconde forme de réalisation du moteur électrique illustrée aux figures 4 et 5, les moyens de fixation de chaque balai 3 à la carte de circuit imprimé 5 comprennent un support formé par un bras élastique 13 fixé, d'une part à la carte 5, et d'autre part au balai 3. Ce bras support 13 est constitué, dans l'exemple représenté, d'une première section rectangulaire 14 percée d'une ouverture 15 permettant d'encliqueter la section ou plaquette 14 sur une extrémité adaptée du balai 3, d'une seconde section 16 inclinée par rapport à la section 14, et d'une troisième section 17 également inclinée, d'un angle obtus, par rapport à la section 16. L'ensemble des trois sections 14, 16, 17 entoure partiellement le collecteur 2. Deux bras 13 sont ainsi disposés de manière symétrique de part et d'autre du collecteur 2.

Chaque bras 13 est muni d'une patte 18 de positionnement traversant à force un trou 10 de la carte de circuit imprimé 5, et d'au moins un doigt 19 conducteur électrique fixé à la face en vis à vis de la carte de circuit imprimé 5. Dans l'exemple représenté, le dispositif comporte ainsi pour chaque bras 13, deux doigts conducteurs 19, fixés par une pâte à souder et après passage dans un four de manière connue en soi.

La patte 18 assure le positionnement correct du bras porte balais 13 par rapport à la carte 5 et résiste à l'effort développé par la pression du balai 3 sur le collecteur 2.

Suivant une variante possible, le trou 10 est métallisé de manière à permettre la conduction électrique par la patte 18. Dans cette variante les doigts conducteurs 19 peuvent donc être supprimés.

L'effort développé par la pression d'application des balais 3 sur le collecteur 2, et auquel doit résister le dispositif support de balai, est de l'ordre de quelques Newtons.

D'autres techniques connues en soi de soudure de composants montés en surface peuvent être mises en oeuvre.

Dans les différentes formes de réalisation possibles de l'invention, les éléments constitutifs des supports des balais 3 ne traversent pas la carte de circuit imprimé 5, seules une ou des pattes de positionnement et de conduction électrique la traversant. Il en résulte que l'opération complémentaire de soudure « à la vague » nécessaire dans l'art antérieur est supprimée, ce qui simplifie le montage des supports de balais et diminue le coût de fabrication de l'ensemble.

## Revendications

1. Moteur électrique, notamment motoréducteur destiné à l'activation d'équipements fonctionnels de véhicules, comprenant un arbre (1) de rotor muni d'un collecteur (2) coopérant avec des balais conducteurs (3) disposés dans des supports (4) de balais fixés à une carte (5) de circuit imprimé, chaque support comprenant un carter métallique (6) contenant le balai, et dont une paroi (9) contiguë à la carte (5) de circuit imprimé comporte au moins une première patte transversale (11) adaptée pour traverser la carte de circuit imprimé afin de positionner et de maintenir le carter sur ladite carte, **caractérisé en ce qu'**il comprend une seconde patte (12) prenant appui sur ladite carte de circuit imprimé sans la traverser.

2. Moteur électrique selon la revendication 1, **caractérisé en ce que** le carter (6) contient un ressort (7) de poussée du balai (3) afin de le maintenir en contact avec le collecteur (2).

3. Moteur électrique selon la revendication 1 ou 2, **caractérisé en ce que** ladite première patte (11) est adaptée pour assurer en outre une liaison électrique.

4. Moteur électrique selon la revendication 3, **caractérisé en ce que** la première patte (11) est montée à force dans la carte (5), revêtue de pâte à souder et traitée dans un four.

5. Moteur électrique selon la revendication 3, **caractérisé en ce que** la première patte (11) est montée à force dans un trou métallisé de la carte (5), afin d'assurer une connexion électrique.

## Claims

1. Electric motor, especially a gearmotor intended for activating functional items of equipment on vehicles, comprising a rotor shaft (1) provided with a commutator (2) that cooperates with conducting brushes (3) that are placed in brush supports (4) that are fixed to a printed-circuit board (5), each support comprising a metal casing (6) containing the brush, and one wall (9) of which, contiguous with the printed-circuit board (5), has at least a first transverse tab (11) suitable for passing through the printed-circuit board so as to place the casing on the said board and to hold it therein, **characterized in that** it includes a second tab (12) that bears on the said printed-circuit board without passing through it.

2. Electric motor according to Claim 1, **characterized in that** the casing (6) contains a spring (7) for pressing on the brush (3) so as to keep it in contact with the commutator (2).

3. Electric motor according to Claim 1 or 2, **characterized in that** the said first tab (11) is suitable for furthermore providing an electrical connection.

4. Electric motor according to Claim 3, **characterized in that** the first tab (11) is press-fitted into the board (5), coated with solder paste and treated in an oven.

5. Electric motor according to Claim 3, **characterized in that** the first tab (11) is press-fitted into a plated-through hole in the board (5) so as to provide an electrical connection.

## Patentansprüche

1. Elektromotor, insbesondere Getriebemotor, der für die Aktivierung von Funktionseinrichtungen von Fahrzeugen bestimmt ist, umfassend eine Rotorwelle (1), die mit einem Kollektor (2) versehen ist, der mit leitenden Bürsten (3) zusammenwirkt, die in an einer gedruckten Schaltungs karte (5) befestigten Bürstenhaltern (4) angeordnet sind, wobei jeder Halter ein die Bürste enthaltendes Gehäuse (6) aus Metall aufweist, von dem eine an die gedruckte Schaltungskarte (5) angrenzende Wand (9) mindestens einen ersten Querlappen (11) aufweist, der dafür ausgelegt ist, die gedruckte Schaltungskarte zu durchsetzen, um das Gehäuse auf der Karte zu positionieren und zu halten, **dadurch gekennzeichnet, daß** es einen zweiten Lappen (12) aufweist, der sich auf der gedruckten Schaltungskarte abstützt, ohne sie zu durchsetzen.

2. Elektromotor nach Anspruch 1, **dadurch gekennzeichnet, daß** das Gehäuse (6) eine Feder (7) zum Ausüben eines Schubs auf die Bürste (3) enthält, um sie mit dem Kollektor (2) in Kontakt zu halten.

3. Elektromotor nach Anspruch 1 oder 2, **dadurch gekennzeichnet, daß** der erste Lappen (11) dafür ausgelegt ist, außerdem eine elektrische Verbindung herzustellen.

4. Elektromotor nach Anspruch 3, **dadurch gekennzeichnet, daß** der erste Lappen (11) unter Kraftaufwand in der Karte (5) montiert ist, mit Schweißpaste bedeckt ist und in einem Ofen behandelt ist.

5. Elektromotor nach Anspruch 3, **dadurch gekennzeichnet, daß** der erste Lappen (11) in einem metallisierten Loch der Karte (5) unter Kraftaufwand montiert ist, um eine elektrische Verbindung herzustellen.
